# EUROPEAN PATENT SPECIFICATION

(11) **EP 0 695 574 B1**
(45) Date of publication and mention of the grant of the patent: **27.01.1999**
(21) Application number: 95112219.1
(22) Date of filing: 03.08.1995
(51) Int. Cl.: B01D 53/22, B01D 53/26

(54) **Gas separation with fractional purge for pre- or post-purification**
Gastrennung mit Spülgas zur Vor- oder Nachreinigung
Séparation de gaz avec purge fractionnée pour la pré- ou post-purification

(30) Priority: 04.08.1994 US 285690
(43) Date of publication of application: 07.02.1996
(73) Proprietor: PRAXAIR TECHNOLOGY, INC., Danbury, CT 06810-5113 (US)
(72) Inventor: Prasad, Ravi, East Amherst, 14051 New York (US); Thompson, David Richard, Grand Island, 14072, New York (US)
(74) Representative: Schwan, Gerhard, Dipl.-Ing.

(56) References cited:
- EP-A- 0 521 784
- US-A- 5 169 412
- US-A- 5 383 956

## Description

### BACKGROUND OF THE INVENTION

### Field of the Invention

This invention relates to membrane gas separation operations. More particularly, it relates to the purge requirements of pre or post gas separation purification operations.

### Description of the Prior Art

Permeable membrane processes and systems have been proposed and used increasingly for significant gas separation operations. In the production of nitrogen by air separation, for example, feed air is brought into contact with the surface of the membrane, and oxygen, as the more readily permeable component of air, selectively passes through the membrane while nitrogen, the less readily permeable component of air, is withdrawn from the membrane systems as a non- permeable product stream. Conventional membrane systems typically produce nitrogen having purity levels of up to about 99.5%. Higher nitrogen purities can be achieved if a post-purification feature is employed. Such processing may also include the use of a countercurrent membrane feed air or product dryer with permeate gas from an air separation membrane being employed as purge gas in the membrane dryer. In some industrial operations, a source of clean, dry compressed air is also desired to prevent corrosion and condensation in instrumentation, piping, pneumatic tools, ventilators and other plant operations. For such latter purposes, separate adsorptive or refrigerative dryers have typically been utilized. Such units, however, tend to have significant product losses, due to purge and blowdown steps, or generally require a significant expenditure of added energy., e.g. for regeneration or refrigeration.

The ability of various membrane materials to permeate water vapor is well known in the art. Thus, a membrane system utilizing such a material could be used to replace the function of the adsorptive (or regenerative) dryer for producing clean, dry air for a variety of purposes. However, many practical commercial asymmetric and composite-type membranes have been characterized by the crossflow permeation model performance, wherein the composition of the bulk gas on the permeate side of the membrane has little effect on the permeation rates achieved. Accordingly, the removal of water vapor in compressed air streams by means of such membrane dryers requires the co-permeation of significant amounts of valuable feed gas as well. Operation at stage cuts, i.e., the permeate to feed flow ratio, on the order of 10% to 30% might be required to achieve the dew point typically provided by adsorptive or refrigerative dryers. As a result, the substitution of crossflow-type membrane dryers to produce clean, dry compressed air is not economically attractive.

Advances in membrane product development and theory have resulted in the development of various composite and asymmetric membranes characterized by a significant degree of counter- currency in operation, and thus follow, at least in part, the countercurrent permeation mathematical model of the art rather than the crossflow model. Membranes designed so that permeation therethrough to a significant extent can be described by the counter- current model benefit from the use of purge gas on the low pressure permeate side of the membrane. It is possible, in such circumstances, to achieve lower stage cuts to achieve the same moisture removal level as in crossflow permeation designs, provided that dry purge gas is available at the job site.

While the membrane drying art has thus progressed and membrane air separation systems have been employed in combination with membrane dryers in commercial operations, it is desirable to achieve further advances in the art, particularly in light of the ever increasing performance requirements applicable to membrane systems in satisfying the needs of a wide variety of industrial applications.

Thus, many membrane nitrogen or other gas separation processes require, or benefit from, the use of a purge stream for pre- or post-air or other gas separation purification operations. In some embodiments, e.g. where a membrane dryer is employed to dry a feed air stream passing to an air separation system for nitrogen production, or a membrane dryer is employed in the nitrogen product stream of a membrane air separation- deoxo nitrogen purification system, the purge stream is commonly obtained from the permeate gas removed from the modules of one of the membrane air separation stages. The use of such permeate streams from air or other gas separation membrane systems for pre- or post-purification applications necessarily entails a pressure drop, usually on the order of a few psi, e.g. 6.9 to 69 kPa (1-10 psi), through the membrane dryers, or through adsorbent beds if used in place of membrane dryers for pre- or post-purification operations. This pressure is usually obtained by back pressurizing the permeate side of the air separation membrane modules in one of the membrane stages. This increased back pressure of the membrane modules reduces the available pressure ratio between the higher feed air pressure on the feed, or non-permeate, side of the membrane modules and the lower pressure on the permeate side of said membrane modules. This approach necessitates an increase in the membrane surface area and in the power required to perform the desired air separation operation. However, this approach eliminates any need for extra compression equipment or blowers.

As taught by US-A-5,169,412, the permeate from all of the modules incorporated in a membrane stage are commonly utilized for desired purge purposes. Thus, the more selectively permeable oxygen that permeates the membrane of single stage air separation membrane 11 of US-A-5,169,412 is withdrawn therefrom through a common discharge line 13 for use on the low pressure, permeate side of membrane dryer 7, although a portion of said dry oxygen-enriched purge gas can be diverted through line 14 so as not to pass through membrane dryer 7 in the event that all of the available purge gas is not needed for the membrane dryer purge purposes. US-A-5,169,412 also discloses a membrane process for the co-production of dry air and nitrogen wherein the first stage or second stage air separation membrane permeate stream is used to purge a membrane air dryer. EP-A-0 430 304 likewise describes the operation of a membrane air separation system with a membrane dryer positioned in the feed air stream, wherein the permeate gas from the air separation membrane modules are passed through outlet 24 and conduit 26 to the permeate side of membranes 8 in housing vessel 6 for use as purge gas to facilitate the drying of the feed air passing therethrough to membrane air separation modules 20 in vessel 16. Similarly, US-A-4,931,070, discloses a two-stage membrane air separation system containing first stage membrane 4 and second stage membrane 7, wherein membrane dryer 16 used to dry the high purity nitrogen product from the membrane air separation-deoxo purification system. Permeate gas withdrawn from the overall second stage membrane modules 7 is used as purge gas on the permeate side of said membrane dryer 16.

In such prior art membrane operations, the total permeate gas flow removed from a membrane air separation stage is utilized, or is available for use, as purge gas for the membrane dryer. As illustrated by US-A-5,169,412, however, the full amount of permeate gas from a membrane air separation system, or a stage thereof, may not be required for membrane dryer purge purposes. Nevertheless, the availability of the total permeate flow from a membrane air separation system, or a stage thereof, is commonly available in ordinary commercial practice.

Under such ordinary commercial practice, and particularly with the common use of back pressurizing of membrane modules as described above, those skilled in the art will appreciate that the membrane air separation stage or stages so involved will necessarily experience some corresponding loss of performance efficiency. It is desired in the art that this loss of efficiency be minimized so that the increase in the power and surface area requirements of the membrane stage(s) resulting from such loss of efficiency can be reduced.

It is an object of the invention, therefore, to provide an improved process and system for membrane nitrogen production with pre- or post-membrane air separation purification operations.

It is another object of the invention to provide a membrane air separation process and system, with pre-or post-air separation purification operations, having enhanced efficiency and reduced power and/or surface area requirements.

With these and other objects in mind, the invention is hereinafter described in detail, the novel features thereof being particularly pointed out in the appended claims.

### Summary of the Invention

One aspect of the present invention is a process for the production of high purity gas product from feed gas as defined in claim 1. A further aspect of the present invention is a system for the production of high purity gas product from feed gas as defined in claim 12.

The purge stream for purging pre- or post-purification operations associated with a membrane air or other gas separation system is taken from only a fraction of the modules of a membrane air or other gas separation stage. As a result, only a portion of the modules in a stage are back pressured on the permeate side thereof and thus suffer reduced efficiency. The efficiency of the overall membrane air separation is thereby increased over that of systems in which the full permeate flow of the stage is back pressured on the permeate side and is available for purge purposes.

### Brief Description of the Drawings

The invention is described further herein with reference to the accompanying drawings in which:
Fig. 1 is a schematic drawing of a high purity nitrogen membrane system/deoxo system in which a fractional purge from the second stage of a two-stage membrane air separation system is used as purge gas for a post-treatment nitrogen product membrane dryer; and
Fig. 2 is a schematic drawing of a high purity nitrogen membrane/deoxo system in which a fractional purge from the first stage of a two-stage membrane air separation system is used as purge gas for a post-treatment nitrogen product membrane dryer.

### Detailed Description of the Invention

The objects of the invention are accomplished by carrying out membrane air or other gas separation operations, with pre- or post-air or other gas separation purification operations, utilizing purge gas taken from only a fraction of the modules in a membrane air or other gas separation stage for purge purposes in the pre- or post-purification operation. In the practice of the invention, therefore, the full permeate flow from said membrane stage is not employed for purge purposes, contrary to conventional practice. Thus, only a fraction of the membrane modules in the stage supplying purge gas needs to be back pressured on the permeate side and thus suffer reduced performance efficiency. The remaining membrane bundles in the particular stage, not required for such purge purposes, are not back pressured, and do not undergo such reduced efficiency. As a result, the overall power and capital costs associated with the particular membrane stage are advantageously reduced as compared to conventional practice.

Under any given production operating conditions, i.e., pressure, temperature, purity, membrane properties and the like, the process recovery and membrane surface area requirements are a function of the pressure ratio between the higher pressure non-permeate stream and the lower pressure permeate stream. When this pressure ratio is caused to decrease, as by back pressurizing on the permeate side, recovery decreases, and the area requirements increase. By minimizing the number of modules in a membrane stage that suffer from this reduced efficiency, and the associated increase in separation power and surface area requirements, the negative impact of back-pressuring the modules to provide the desired purge gas flow for pre- or post- purification operations is effectively decreased. This leads to desirably lower power and surface area costs, on the order of 1-5%, than pertain when all of the modules of the pertinent membrane stage have increased back pressure imposed thereon.

Thus, the invention achieves a desired reduction in back pressure, and in membrane air or other gas separation efficiency loss, for a membrane product system that utilizes permeate therefrom for purge purposes in another system for pre-purification of the feed air or other gas to the membrane air separation system or for post-purification of the nitrogen or other product from said separation system. As indicated above, such desired results are obtained by utilizing only a portion of the membrane modules in a particular membrane stage for purge purposes instead of having the full permeate flow from that stage available for such purge purposes. While it is appreciated that the amount of permeate gas in any given membrane air or other gas separation stage for purge purposes will depend on the overall factors pertaining to a given separation/purification operation, the portion of the modules needed to provide the amount of permeate from a given membrane stage to provide purge gas to a membrane dryer(s) or absorbent beds used for purification will generally be on the order of from about 10% to about 80% of the membrane modules in a stage. It will be understood that it is desirable to utilize the minimum percentage of modules that generates sufficient flow for the desired purge purposes. In addition, by reducing the purge flow to that required for pre- or post-purification, and not using the whole available permeate stream, the pressure drop through the pre- or post-purification device is reduced.

It should be noted that the permeation rate through a membrane gas separation module, and hence the performance efficiency of the module, depend on several process and system variables, such as the composition and properties of the membrane material, the configuration of the membrane air separation module, the desired product properties, the condition of the feed air or other gas to the membrane separation system, and the temperature and pressure of the membrane separation operation. Under given operating conditions, the efficiency depends upon the pressure ratio of the feed gas to the permeate in the module.

The novel approach of the invention enables the overall pressure ratio to be increased, and overall performance efficiency to be enhanced, with lower power and surface area requirements, than has heretofore been possible in conventional practice where the full permeate flow from a stage is made available for purge purposes and said back-pressuring on the permeate side is needed to facilitate purge in pre- or post-purification operations.

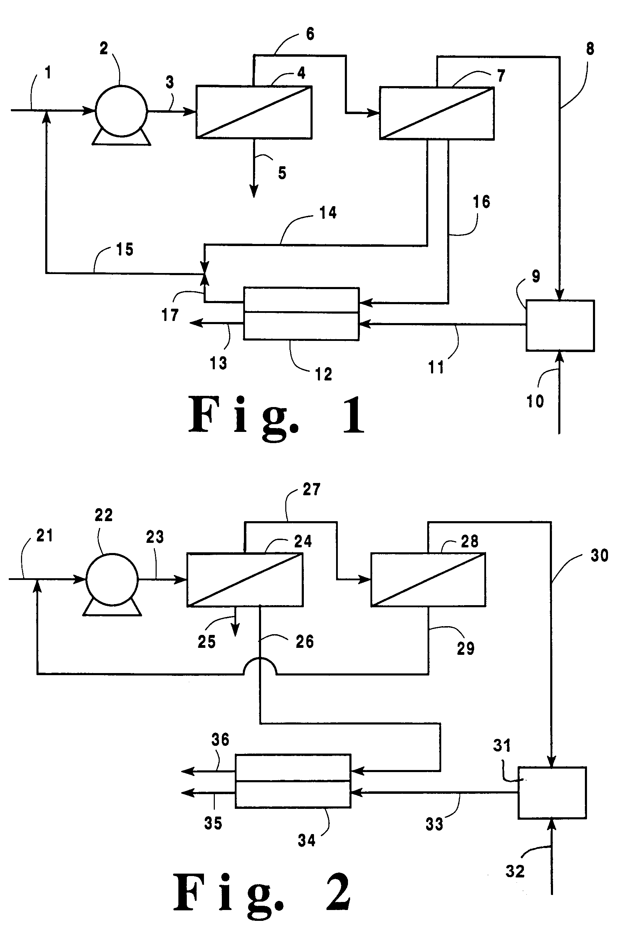

The invention is illustrated in Fig. 1 of the drawings with respect to the drawings with respect to a particular example wherein permeate from the modules of the second stage of an air separation membrane nitrogen plant is used to provide purge for the post-treatment drying of the high purity product nitrogen from said air separation membrane plant and subsequent deoxo purification. In the illustrative example, the plant is operated at 38°C (100°F) and 9.6 bar (125 psig). The oxygen/nitrogen selectivity of the air separation membrane is 4.64, and the permeation rate of the more selectively permeable oxygen component of the feed air is 8.35 x 10⁵ Barrer/cm. The nitrogen product purity exiting the membrane air separation system is 99% and the additional back pressure needed to purge the membrane dryer is 1.3 bar (4 psig). The membrane surface area is equally distributed between the two stages of the membrane air separation system.

In said Fig. 1 embodiment, feed air is passed in line 1 to feed air compressor 2 from which compressed feed air is passed in line 3 to first stage air separation membrane 4 of a two-stage air separation system. The more readily permeable oxygen component of the feed air is selectively permeated therein and is withdrawn as an oxygen-enriched stream from the permeate side of said membrane 4 through line 5, typically at 1.0 bar (0 psig), for discharge from the system. The non-permeate gas, i.e. partially purified nitrogen, is withdrawn from the non-permeate side of said membrane 4 through line 6 for passage to second stage air separation membrane 7. The less readily permeable nitrogen product is recovered from the non-permeate side of said membrane 7 through line 8. To remove residual quantities of oxygen from the product nitrogen, the nitrogen product is passed in said line 8 to a conventional deoxo unit 9. Hydrogen or a hydrocarbon is added to deoxo unit 9 through line 10 for reaction with said residual oxygen to form water vapor. The thus-purified nitrogen is passed from deoxo unit 9 through line 11 to the feed, i.e. non-permeate, side of membrane dryer 12. Dry, high purity nitrogen product is recovered from the non-permeate side of said membrane dryer through line 13.

Permeate from second stage air separation membrane 7 that is not required for providing purge to membrane dryer 12 is passed from a portion of the modules in said membrane 7, typically at 1.0 bar (0 psig), through lines 14 and 15 for recycle to line 1 for passage, with additional quantities of feed air, to feed air compressor 2 and first stage air separation membrane 4. The permeate from the remaining portion of modules in said membrane 7 is to be used for purge purposes in said membrane dryer 12. Accordingly, the permeate from the remaining portion of modules from membrane 7 is separately removed therefrom through line 16. For suitable use as purge, the permeate from said remaining portion of modules is back pressured automatically by a self-regulating mechanism, so as to be withdrawn at a pressure suitable for purge purposes, and the pressure drop through the membrane dryer, e.g. the above indicated 1.3 bar (4 psig). Purge gas from line 16 is passed, at said suitable purge pressure, to the permeate side of membrane dryer 12 to facilitate the permeation of water vapor through the membrane for the desired drying of the high purity nitrogen product therein. Said purge gas and water vapor containing permeate gas is withdrawn from membrane dryer 12 on the permeate side thereof through line 17 and is desirably recycled, together with the permeate in line 14, to line 1 for processing with additional quantities of feed air passing therein to feed air compressor 2.

If the membrane air separation system of first stage membrane 4 and second stage membrane 7 were operated, with no additional back pressure imposed in second stage membrane 7, to produce 283 m³/h (10,000 cfh (cubic feet per hour)) of nitrogen product, a total membrane surface area of 1325 m² (14,260 ft²), and an air feed flow of 1023 m³/h (36,120 cfh), would be required. If, on the other hand, all of the modules of second stage membrane 7 have the additional 1.3 bar (4 psi) back pressure imposed thereon, as in conventional practice where the full permeate flow is withdrawn without separation, the required membrane surface area is increased to 1419 m² (15,270 ft²), and the feed air flow required is increased to 1058 m³/h (37,360 cfh). However, if in accordance with the practice of the invention, only 50% of the modules in said stage membrane 7 are connected for removal in line 16 and are thus subjected to the additional back pressure for purge purposes, with the remaining 50% of the modules in membrane 7 being connected for separate removal through line 14 with such additional back pressure, the required membrane surface area is desirably reduced to 1374 m² (14,790 ft²), and the feed air flow is desirably reduced to 1042 m³/h (36,800 cfh). This comparative example clearly demonstrates that the back pressure on the permeate side of any of the modules of the membrane air separation system decreases overall plant performance. Thus, the membrane air separation surface area and feed air flow requirements were lowest when the plant was operated with no permeate side back pressure requirement. However, back pressure is required in order to enable permeate from the air separation membrane system to be desirably used on the permeate side of the downstream membrane dryer without the need to use added compression equipment. When only 50% of the modules in second stage membrane 7 has additional back pressure imposed thereon, the membrane surface area of the two-stage membrane air separation system needed to achieve the desired nitrogen product production is 3.2% less than in the conventional practice wherein all of the modules of second stage membrane 7 have additional back pressure imposed thereon so as to be available for purge purposes. Similarly, the feed air flow is 1.5% lower for the embodiment of the invention in which only 50% of the modules in second stage membrane 7 are subjected to additional back pressure than the feed air requirements in said conventional practice.

The magnitude of the change in efficiency achieved in the practice of the invention is a function of the number of modules back pressured, the magnitude of the back pressure, the product purity desired and the plant operating conditions. The number of modules that are back pressured is a function of the required purge flow rate. It will be seen that the advantages achieved by the practice of the invention are greater when only a small amount of purge is required. This minimizes the number of modules that must be back pressured in a membrane stage, thus increasing the plant efficiency. Reductions in efficiency have a greater impact when high purity product, e.g. greater than 99%, is being produced. Thus, the invention is most advantageous when higher product purities are being produced by the membrane air separation system.

Fig. 2 of the drawings illustrates another embodiment in which a portion of the first stage permeate gas is used for purge purposes. Feed air is introduced to the system through line 21 and is passed to feed air compressor 22 from which compressed feed air is passed in line 23 to first stage air separation membrane 24 of a two-stage membrane air separation system. The more readily permeable oxygen component of the feed air is selectively permeated therein. In the practice of this embodiment of the invention, only a portion of said first stage permeate is withdrawn from the permeate side of membrane 24 through line 25 for discharge from the system. The remaining portion of said first side permeate is separately withdrawn through line 26 for use as purge gas in the downstream dryer referred to below.

Non-permeate gas is passed in line 27 from first stage membrane 24 to the feed, i.e. non-permeate, side of second stage membrane 28. Permeate removed from said membrane 28 is recycled in line 29 to line 21 for passage, with additional quantities of feed air, to feed air compressor 22 and first stage membrane 24. Non-permeate gas from membrane 28, i.e. low purity nitrogen product, is passed in line 30 to deoxo unit 31 for reaction therein of residual amounts of oxygen in the nitrogen product with hydrogen introduced to said deoxo unit 31 through line 32. The thus-purified nitrogen product is passed from the deoxo unit in line 33 to membrane dryer 34, from which dry, high purity nitrogen product is recovered through line 35.

To facilitate the selective permeation of water vapor from the product nitrogen, the portion of the permeate from first stage air separation membrane 24 that is separately removed therefrom through line 26 is back pressured and is passed to the permeate side of membrane dryer 34. Such purge gas, and the water vapor-containing permeate from said membrane dryer 34 are discharged from the system through line 36.

Those skilled in the art will appreciate that various changes and modifications can be made in the details of the invention as herein described without departing from the scope of the invention as set forth in the appended claims. As indicated above, the purification operations can be carried out by means of any suitable purification system, for example, a membrane purification system, such as the membrane dryer used in the illustrative examples, or a suitable adsorption system, such as a pressure swing adsorption (PSA) system or a thermal swing adsorption (TSA) system can be used for such purification purposes. As also noted, the purification operation can either be downstream of the membrane air separation system, as in the illustrated examples, or upstream thereof, as for feed air drying, including embodiments such as in US-A-5,169,412, wherein both clean dry air and high purity nitrogen product is desired. In other illustrative examples of embodiments of the invention, a purification operation upstream of the membrane gas separation system can be used for other purposes, such as for the removal of carbon dioxide or hydrocarbons from feed air or other gas if a membrane system used for gas separation is sensitive thereto. In any event, the advantageous benefits of the invention are achieved by the fractional purge feature thereof wherein only a portion, and not all, of the permeate of a membrane air separation stage is withdrawn for purge purposes.

It is also within the scope of the invention to withdraw gas from a portion of the gas separation modules otherwise used to provide coproduct, e.g. second stage oxygen in certain membrane air separation operations, for the purge purposes of the invention. As shown in the Drawings, it is within the scope of the invention to separately withdraw non-product from the portion of the membrane modules in a gas separation membrane system, or any stage thereof, not used for purge or purification purposes, for discharge from the system and/or for recycle upstream of said system.

The invention represents a highly significant advance in the membrane air separation art, enabling the efficiency thereof to be enhanced, with lower power and membrane surface area requirements, than previously encountered in conventional practice.

## Claims

1. A process for the production of high purity gas product from feed gas comprising:
(a) passing feed gas to a gas separation membrane system containing a number of membrane modules capable of selectively permeating a more readily permeable component of said feed gas;
(b) recovering product gas from the gas separation membrane system;
(c) withdrawing non-product permeate gas from a portion of the membrane modules in said gas separation membrane system, or any stage thereof, for use as purge gas in purification or drying operations upstream or downstream of said gas separation membrane system, said portion of membrane modules being back pressured to provide a pressure facilitating the use of non-product gas for purge purposes; and
(d) separately withdrawing non-product permeate gas from the remaining portion of the membrane modules in said gas separation membrane system, or any stage thereof, for discharge from the system, and/or for recycle upstream of the gas separation membrane system, said remaining portion of the membrane modules not being back pressured, whereby the efficiency of the gas separation membrane system is enhanced over systems in which the full flow of non-product permeate gas is withdrawn from the membrane system, or any stage thereof without such separation, the power and membrane surface area requirements being advantageously decreased by such separate withdrawal of a portion of the non-product permeate gas for purge purposes.

2. The process of Claim 1 in which said feed gas is feed air and the gas separation membrane system is an air separation system capable of selectively permeating oxygen, with nitrogen product gas being recovered from the non-permeate side thereof, and with oxygen-rich non-product gas being withdrawn on the permeate side of the membrane modules in said air separation membrane system or any stage thereof.

3. The process of Claim 1 in which the portion of the membrane modules from which non-product gas is withdrawn for use as purge gas is from about 10% to about 80% of the total number of modules.

4. The process of Claim 1 in which said gas separation membrane system comprises more than one stage, the non-product gas withdrawn for use as purge gas being withdrawn from one of said stages of the gas separation membrane system.

5. The process of Claim 2 in which the nitrogen product recovered from the non-permeate side of the air separation system is passed to downstream purification or drying operations, said permeate withdrawn from a portion of the membrane modules for use as purge gas being used as purge gas in the downstream purification or drying operations.

6. The process of Claim 2 and including drying the feed air passing to the air separation membrane system, said permeate withdrawn from a portion of the membrane modules for use as purge gas being used as purge gas for the drying of feed air.

7. The process of Claim 5 in which the purified nitrogen product is passed to a membrane dryer for said drying thereof, the portion of the permeate from the air separation membrane system used for purge purposes being passed to the permeate side of said membrane dryer.

8. The process of Claim 7 in which said air separation membrane system comprises a two-stage system, a portion of the permeate from the second stage of said system being used for the desired purge purposes.

9. The process of Claim 8 and including recycling purge and permeate gas withdrawn from the membrane dryer, and the separate portion of permeate from the second stage, for passage, together with additional quantities of feed air, to the air separation membrane system.

10. The process of Claim 7 in which said air separation membrane system comprises a two-stage system, a portion of the permeate from the first stage of the system being used for the desired purge purposes.

11. The process of Claim 10 and including recycling permeate from the second stage of the air separation membrane system for passage, together with additional quantities of feed air, to the air separation membrane system.

12. A system for the production of high purity gas product from feed gas comprising:
(a) a gas separation membrane system containing a number of membrane modules capable of selectively permeating a more readily permeable component of feed gas;
(b) means (2) for passing feed gas to said gas separation membrane system;
(c) mean (8) for recovering product gas from said gas separation membrane system;
(d) purification means (12) for purifying and/or drying feed gas passing to the gas separation membrane system or purifying and/or drying product gas recovered therefrom:
(e) conduit means (16) for withdrawing nonproduct permeate gas from a portion of the membrane modules in said gas separation membrane system or any stage thereof for use as purge gas in purification or drying operations upstream or downstream of said gas separation system, said portion of membrane modules being back pressured to provide a pressure facilitating the use of non-product gas for purge purposes; and
(f) conduit means (14) of separately withdrawing nonproduct permeate gas from the remaining portion of the membrane modules in said gas separation membrane system for discharge from the system and/or for recycle upstream of the gas separation membrane system, said remaining portion of the membrane modules not being back pressured, whereby the efficiency of the gas separation membrane system is enhanced over systems in which the full flow of non-product permeate gas from the membrane system, or any stage thereof, is withdrawn without such separation, the power and membrane surface area requirements being advantageously decreased by such separate withdrawal of a portion of the non-product permeate gas for purge purposes.

13. The system of Claim 12 in which the portion of the membrane modules from which non-product permeate gas is withdrawn for use as purge gas is from about 10% to about 80% of the total number of modules.

14. The system of Claim 12 in which said gas separation membrane system is an air separation membrane system capable of selectively permeating oxygen as the more readily permeable component of feed air, said means for recovering product gas comprises means to recover nitrogen product as non-permeate gas.

15. The system of Claim 14 in which said air separation membrane system comprises more than one stage, the conduit means for withdrawing permeate for use as purge gas being adapted to pass said permeate from one of the air separation membrane stages.

16. The system of Claim 14 in which said purification means comprises drying means for drying the feed air passing to the air separation membrane system, said conduit means for withdrawing permeate for purge purposes being adapted to pass said permeate to the drying means for purge purposes therein.

17. The system of Claim 14 in which said purification means comprises purification or drying means downstream of the air separation membrane system for further purification or drying of the nitrogen product, said conduit means for withdrawing permeate for purge purposes being adapted to pass said permeate to the purification or drying means for purge purposes therein.

18. The system of Claim 17 in which said purification or drying means comprises a membrane dryer.

## Patentansprüche

1. Verfahren für die Produktion von hochreinem Gasprodukt aus Einsatzgas, bei welchem:
(a) Einsatzgas zu einem Gastrennmembransystem geleitet wird, welches eine Anzahl von Membranmodulen enthält, die in der Lage sind, selektiv eine leichter permeierbare Komponente des Einsatzgases zu permeieren;
(b) Produktgas von dem Gastrennmembransystem gewonnen wird;
(c) Nichtproduktpermeatgas von einem Teil der Membranmodule in dem Gastrennmembransystem oder einer jeglichen Stufe desselben zur Verwendung als Spülgas bei Reinigungs- oder Trocknungsvorgängen stromauf oder stromab des Gastrennmembransystems abgezogen wird, wobei lur einen Gegendruck des Teils der Membranmodule gesorgt wird, um einen Druck bereitzustellen, der die Verwendung des Nichtproduktgases für Spülzwecke erleichtert; und
(d) Nichtproduktpermeatgas separat von dem verbleibenden Teil der Membranmodule in dem Gastrennmembransystem oder einer jeglichen Stufe desselben abgezogen wird, um von dem System abgegeben zu werden und/oder um stromauf von dem Gastrennmembransystem rückgeführt zu werden, wobei bei dem verbleibenden Teil der Membranmodule nicht für einen Rückdruck gesorgt ist, wodurch die Effizienz des Gastrennmembransystems gegenüber Systemen verbessert wird, bei welchen der gesamte Durchfluß an Nichtproduktpermeatgas von dem Membransystem oder einer jeglichen Stufe desselben abgezogen wird, ohne daß eine solche Trennung stattfindet, wobei die Anforderungen bezüglich Energie und Membranoberfläche in vorteilhafter Weise durch ein derartiges separates Abziehen eines Teils des Nichtproduktpermeatgases für Spülzwecke gesenkt werden.

2. Verfahren nach Anspruch 1, bei welchem das Einsatzgas Einsatzluft ist und das Gastrennmembransystem ein Luftzerlegungssystem ist, welches in der Lage ist, Sauerstoff selektiv zu permeieren, wobei Stickstoff ein von der Nichtpermeatseite desselben gewonnenes Produktgas ist und wobei sauerstoffreiches Nichtproduktgas an der Permeatseite der Membranmodule in dem Luftzerlegungsmembransystem oder einer jeglichen Stufe desselben abgezogen wird.

3. Verfahren nach Anspruch 1, bei welchem der Teil der Membranmodule, von welchem Nichtproduktgas zur Verwendung als Spülgas abgezogen wird, zwischen etwa 10 % und etwa 80 % der gesamten Modulzahl ausmacht.

4. Verfahren nach Anspruch 1, bei welchem das Gastrennmembransystem mehr als eine Stufe aufweist, wobei das zur Verwendung als Spülgas abgezogene Nichtproduktgas von einer der Stufen des Gastrennmembransystems abgezogen wird.

5. Verfahren nach Anspruch 2, bei welchem das Stickstoffprodukt, welches von der Nichtpermeatseite des Luftzerlegungssystems abgezogen wird, zu stromab liegenden Reinigungs- oder Trocknungsvorgängen übergeleitet wird, wobei von einem Teil der Membranmodule zur Verwendung als Spülgas abgezogenes Permeat als Spülgas in den stromab liegenden Reinigungs- oder Trocknungsvorgängen verwendet wird.

6. Verfahren nach Anspruch 2, bei welchem ferner die zu dem Luftzerlegungsmembransystem geleitete Einsatzluft getrocknet wird, wobei das von einem Teil der Membranmodule zur Verwendung als Spülgas abgezogene Permeat als Spülgas für das Trocknen von Einsatzluft verwendet wird.

7. Verfahren nach Anspruch 5, bei welchem das gereinigte Stickstoffprodukt zu einem Membrantrockner zwecks Trocknung desselben geleitet wird, wobei der für Spülzwecke verwendete Teil des Permeatgases von dem Luftzerlegungsmembransystem zu der Permeatseite des Membrantrockners geleitet wird.

8. Verfahren nach Anspruch 7, bei welchem das Luftzerlegungsmembransystem ein zweistufiges System ist, wobei ein Teil des Permeats von der zweiten Stufe des Systems für die erwünschten Spülzwecke verwendet wird.

9. Verfahren nach Anspruch 8, bei welchem von dem Membrantrockner abgezogenes Spül- und Permeatgas umgewälzt wird, und bei welchem der getrennte Teil des Permeats von der zweiten Stufe umgewälzt wird, um zusammen mit zusätzlichen Mengen an Einsatzluft zu dem Luftzerlegungsmembransystem übergeleitet zu werden.

10. Verfahren nach Anspruch 7, bei welchem das Luftzerlegungsmembransystem ein zweistufiges System ist, wobei ein Teil des Permeats von der ersten Stufe des Systems für die erwünschten Spülzwecke verwendet wird.

11. Verfahren nach Anspruch 10, bei welchem Permeat von der zweiten Stufe des Luftzerlegungsmembransystems umgewälzt wird, um zusammen mit zusätzlichen Mengen von Einsatzluft zu dem Luftzerlegungsmembransystem übergeleitet zu werden.

12. System für die Erzeugung von hochreinem Gasprodukt aus Einsatzgas mit:
(a) einem Gastrennmembransystem, welches eine Anzahl an Membranmodulen aufweist, die in der Lage sind, eine leichter permeierbare Komponente des Einsatzgas selektiv zu permeieren;
(b) einer Anordnung (2) zum Überleiten von Einsatzgas zu dem Gastrennmembransystem;
(c) einer Anordnung (8) zum Gewinnen von Produktgas von dem Gastrennmembransystem;
(d) einer Reinigungsanordnung (12) zum Reinigen und/oder Trocknen von Einsatzgas, welches zu dem Gastrennmembransystem geleitet wird oder zum Reinigen und/oder Trocknen von Produktgas, welches von diesem gewonnen wird;
(e) einer Leitungsanordnung (16) zum Abziehen von Nichtproduktpermeatgas von einem Teil der Membranmodule in dem Gastrennmembransystem oder einer jeglichen Stufe desselben zwecks Verwendung als Spülgas bei Reinigungs- oder Trocknungsvorgängen stromauf oder stromab des Gastrennsystems, wobei bei einem Teil des Membranmodule für einen Rückdruck gesorgt ist, um einen Druck bereitzustellen, der die Verwendung des Nichtproduktgases für Spülzwecke erleichtert; und
(f) einer Leitungsanordnung (14) zum separaten Abziehen von Nichtproduktpermeatgas von dem verbleibenden Teil der Membranmodule in dem Gastrennmembransystem zwecks Ableitung von dem System und/oder zwecks Umwälzung stromauf von dem Gastrennmembransystem, wobei bei dem verbleibenden Teil der Membranmodule nicht für einen Rückdruck gesorgt ist, wodurch die Effizienz des Gastrennmembransystems gegenüber Systemen verbessert ist, bei welchen der volle Durchfluß an Nichtproduktpermeatgas von dem Membransystem oder einer jeglichen Stufe desselben ohne eine derartige Abtrennung abgezogen wird, wobei die Anforderungen bezüglich Energie und Membranoberfläche durch eine solche separate Ableitung eines Teils des Nichtproduktpermeatgases zu Spülzwecken in vorteilhafter Weise gesenkt werden.

13. System nach Anspruch 12, bei welchem der Teil der Membranmodule, von welchem Nichtproduktpermeatgas abgezogen wird, um als Spülgas verwendet zu werden, zwischen etwa 10 % und etwa 80 % der gesamten Modulzahl ausmacht.

14. System nach Anspruch 12, bei welchem das Gastrennmembransystem ein Luftzerlegungsmembransystem ist, welches in der Lage ist, Sauerstoff als die leichter permeierbare Komponente von Einsatzluft selektiv zu permeieren, wobei die Anordnung zum Gewinnen von Produktgas eine Anordnung zum Gewinnen von Stickstoffprodukt als Nichtpermeatgas aufweist.

15. System nach Anspruch 14, bei welchem das Luftzerlegungsmembransystem mehr als eine Stufe aufweist, wobei die Leitungsanordnung zum Abziehen von Permeat zur Verwendung als Spülgas ausgelegt ist, um das Permeat von einer der Luftzerlegungsmembranstufen abzuleiten.

16. System nach Anspruch 14, bei welchem die Reinigungsanordnung eine Trocknungsanordnung zum Trocknen der Einsatzluft aufweist, die zu dem Luftzerlegungsmembransystem geleitet wird, wobei die Leitungsanordnung zum Abziehen von Permeat für Spülzwecke ausgelegt ist, um das Permeat zu der Trocknungsanordnung überzuleiten, um in dieser für Spülzwecke zu dienen.

17. System nach Anspruch 14, bei welchem die Reinigungsanordnung eine Reinigungs- oder Trocknungsanordnung stromab des Luftzerlegungsmembransystems zwecks weiterer Reinigung oder Trocknung des Stickstoffprodukts ist, wobei die Leitungsanordnung zum Abziehen von Permeat für Spülzwecke ausgelegt ist, um das Permeat zu der Reinigungs- oder Trocknungsanordnung überzuleiten, um in dieser für Spülzwecke zu dienen.

18. System nach Anspruch 17, bei welchem die Reinigungs- oder Trocknungsanordnung einen Membrantrockner aufweist.

## Revendications

1. Procédé de production d'un produit gazeux de haute pureté à partir d'un gaz d'alimentation comprenant :
(a) le fait de faire passer du gaz d'alimentation dans un système de membranes de séparation des gaz contenant un certain nombre de modules de membrane capables de laisser passer sélectivement par perméation un constituant plus aisément perméable de ce gaz d'alimentation ;
(b) le fait de récupérer le produit gazeux à partir du système de membranes de séparation des gaz ;
(c) le fait d'éliminer le gaz de perméat différent du produit d'une partie des modules de membrane se trouvant dans ce système de membranes de séparation des gaz, ou dans n'importe quel étage de celui-ci, pour l'utilisation comme gaz de purge dans des opérations de purification ou de séchage en amont ou en aval de ce système de membranes de séparation des gaz, cette partie des modules de membrane étant soumise à une contrepression pour fournir une pression facilitant l'utilisation du gaz différent du produit à des fins de purge ; et
(d) le fait d'éliminer séparément le gaz différent du produit de la partie restante des modules de membrane se trouvant dans ce système de membranes de séparation des gaz, ou dans un étage quelconque de celui-ci, pour l'évacuation hors du système, et/ou pour le recyclage en amont du système de membranes de séparation des gaz, cette partie restante des modules de membrane n'étant pas soumise à une contre-pression, grâce à quoi le rendement du système de membranes de séparation des gaz est amélioré par rapport aux systèmes dans lesquels le courant complet de gaz de perméat différent du produit est éliminé du système de membranes, ou de n'importe quel étage de celui-ci, sans cette séparation, la puissance et la surface de membranes nécessaires étant avantageusement réduites par cette élimination séparée d'une partie du gaz de perméat différent du produit à des fins de purge.

2. Procédé selon la revendication 1, dans lequel ce gaz d'alimentation est de l'air d'alimentation et le système de membranes de séparation des gaz est un système de séparation de l'air capable de laisser passer sélectivement l'oxygène par perméation, l'azote gazeux produit étant récupéré du côté non-perméat de celui-ci, et le gaz différent du produit riche en oxygène étant extrait du côté perméat des modules de membrane dans ce système de membranes de séparation de l'air ou à n'importe quel étage de celui-ci.

3. Procédé selon la revendication 1, dans lequel la partie des modules de membrane dont le gaz différent du produit est extrait pour l'utilisation comme gaz de purge est d'environ 10 % à environ 80 % du nombre total de modules.

4. Procédé selon la revendication 1, dans lequel ce système de membranes de séparation des gaz comprend plusieurs étages, le gaz différent du produit extrait pour l'utilisation comme gaz de purge étant extrait d'un de ces étages du système de membranes de séparation des gaz.

5. Procédé selon la revendication 2, dans lequel l'azote produit récupéré du côté non-perméat du système de séparation de l'air est envoyé dans des opérations de purification ou de séchage en aval, ce perméat extrait d'une partie des modules de membrane pour l'utilisation comme gaz de purge étant utilisé comme gaz de purge dans les opérations de purification ou de séchage en aval.

6. Procédé selon la revendication 2 et comprenant un séchage de l'air d'alimentation envoyé au système de membranes de séparation de l'air, ce perméat extrait d'une partie des modules de membrane pour l'utilisation comme gaz de purge étant utilisé comme gaz de purge pour le séchage de l'air d'alimentation.

7. Procédé selon la revendication 5, dans lequel l'azote purifié produit est envoyé dans un séchoir à membrane pour être séché, la partie du perméat provenant du système de membranes de séparation de l'air utilisée à des fins de purge étant envoyée du côté perméat de ce séchoir à membrane.

8. Procédé selon la revendication 7, dans lequel ce système de membranes de séparation de l'air comprend un système à deux étages, une partie du perméat provenant du second étage de ce système étant utilisée pour effectuer la purge désirée.

9. Procédé selon la revendication 8 et comportant le recyclage de la purge et du gaz de perméat extrait du séchoir à membrane, et de la partie séparée du perméat provenant du second étage, en les envoyant, en même temps que des quantités supplémentaires d'air d'alimentation, dans le système de membranes de séparation de l'air.

10. Procédé selon la revendication 7, dans lequel ce système de membranes de séparation de l'air comprend un système à deux étages, une partie du perméat du premier étage du système étant utilisée pour effectuer la purge désirée.

11. Procédé selon la revendication 10 et comprenant le recyclage du perméat du second étage du système de membranes de séparation de l'air pour l'envoi, avec des quantités supplémentaires d'air d'alimentation, dans le système de membranes de séparation de l'air.

12. Système pour la production d'un produit gazeux de haute pureté à partir d'un gaz d'alimentation comprenant :
(a) un système de membranes de séparation des gaz contenant un certain nombre de modules de membrane capables de laisser passer sélectivement par perméation un constituant plus aisément perméable du gaz d'alimentation ;
(b) des moyens pour faire passer du gaz d'alimentation dans ce système de membranes de séparation des gaz ;
(c) des moyens (8) pour récupérer le gaz produit à partir de ce système de membranes de séparation des gaz ;
(d) des moyens de purification (12) pour purifier et/ou sécher le gaz d'alimentation envoyé dans le système de membranes de séparation des gaz ou pour purifier et/ou sécher le gaz produit récupéré à partir de celui-ci ;
(e) des moyens de conduite (16) pour extraire le gaz de perméat différent du produit d'une partie des modules de membrane présents dans ce système de membranes de séparation des gaz ou dans n'importe quel étage de celui-ci pour l'utilisation comme gaz de purge dans des opérations de purification ou de séchage en amont ou en aval de ce système de séparation des gaz, cette partie des modules de membrane étant soumise à une contre-pression pour établir une pression facilitant l'utilisation du gaz différent du produit à des fins de purge ; et
(f) des moyens de conduite (14) pour extraire séparément un gaz de perméat différent du produit de la partie restante des modules de membrane de ce système de membranes de séparation des gaz pour évacuer du système et/ou pour recycler en amont du système de membranes de séparation des gaz, cette partie restante des modules de membrane n'étant pas soumise à une contrepression, de sorte que l'efficacité du système de membranes de séparation des gaz est améliorée par rapport aux systèmes dans lequel la totalité du courant de gaz de perméat différent du produit sortant du système de membranes, ou de n'importe quel étage de celui-ci, est extraite sans effectuer cette séparation, la puissance et la surface de membrane nécessaires étant avantageusement réduites par cette extraction séparée d'une partie du gaz de perméat différent du produit, à des fins de purge.

13. Système selon la revendication 12, dans lequel la partie des modules de membrane dont le gaz du perméat différent du produit est extrait pour l'utilisation comme gaz de purge est d'environ 10 % à environ 80 % du nombre total de modules.

14. Système selon la revendication 12, dans lequel ce système de membranes de séparation des gaz est un système de membranes de séparation de l'air capable de laisser passer sélectivement par perméation l'oxygène en tant que constituant traversant le plus aisément par perméation de l'air d'alimentation, ce moyen pour récupérer le gaz produit comprend des moyens pour récupérer l'azote produit comme gaz différent du perméat.

15. Système selon la revendication 14, dans lequel ce système de membranes de séparation de l'air comprend plusieurs étages, le moyen de conduite pour extraire le perméat pour l'utilisation comme gaz de purge étant conçu pour laisser passer ce gaz de perméat à partir d'un des étages de membranes de séparation de l'air.

16. Système selon la revendication 14, dans lequel ce moyen de purification comprend des moyens pour sécher l'air d'alimentation envoyé au système de membranes de séparation de l'air, ces moyens de conduite pour extraire le perméat à des fins de purge étant conçus pour faire passer ce perméat dans le moyen de séchage pour y effectuer la purge.

17. Système selon la revendication 14, dans lequel ces moyens de purification comprennent des moyens de purification ou de séchage en aval du système de membranes de séparation de l'air pour une purification ou un séchage supplémentaires de l'azote produit, ces moyens de conduite pour extraire le perméat à des fins de purge étant conçus pour envoyer ce perméat aux moyens de purification ou de séchage à des fins de purge dans celui-ci.

18. Système selon la revendication 17, dans lequel ces moyens de purification ou de séchage comprennent un système de séchage à membranes.
